# EUROPÄISCHE PATENTANMELDUNG

(11) **EP 0 787 612 A1**
(43) Veröffentlichungstag der Anmeldung: **06.08.1997**
(21) Anmeldenummer: 97101052.5
(22) Anmeldetag: 23.01.1997
(51) Int. Cl.: B60J 7/22

(54) **Windabweiser für ein öffnungsfähiges Fahrzeugdach**

(30) Priorität: 02.02.1996 DE 19603670
(71) Anmelder: WEBASTO KAROSSERIESYSTEME GmbH, D-82131 Stockdorf (DE)
(72) Erfinder: Weissbrich, Alfons, Dr., 82131 Gauting (DE)
(74) Vertreter: Wiese, Gerhard

(57) **Zusammenfassung**

Die Erfindung betrifft einen Windabweiser für ein öffnungsfähiges Fahrzeugdach (2), bei dem der Körper des Windabweisers (8) von einer flexiblen dünnwandigen Schicht (9) gebildet wird, die an wenigstens zwei gegenüberliegenden Seiten an Streben (10;11) befestigt ist. Um eine leichte Austauschbarkeit oder Entnahme zu Reinigungszwecken zu ermöglichen, ist erfindungsgemäß vorgesehen, daß beide Streben (10;11) lösbar am Fahrzeugdach (2) oder einem mit diesem verbundenen Teil befestigt sind, wobei vorzugsweise die Schicht (9) an wenigstens einer der Streben (10;11) lösbar befestigt ist.

## Beschreibung

Die Erfindung betrifft einen Windabweiser für ein öffnungsfähiges Fahrzeugdach gemäß dem Oberbegriff des Patentanspruchs 1.

Ein gattungsgemäßer Windabweiser, bei dem der Körper von einer flexiblen dünnwandigen Schicht aus einem Gewebe oder einer Folie gebildet wird, welche an wenigstens zwei gegenüberliegenden Seiten an rahmenförmigen Streben befestigt ist, ist aus der DE C2 40 39 485 bekannt. Das Gewebe ist dort luftdurchlässig, wodurch der Windabweiser eine sehr gute geräuschdämpfende Wirkung erzielt. Nachteilig ist bei einem solchen luftdurchlässigen Windabweiser jedoch, daß sich in diesem Schmutz und Insekten verfangen, wodurch er sehr schnell unansehnlich wird. Durch die starre Befestigung am Fahrzeugdach ist eine Reinigung des Windabweisers nur sehr schwer möglich.

Der vorliegenden Erfindung liegt die Aufgabe zugrunde, einen Windabweiser zu schaffen, der zu Reinigungszwecken leicht abzunehmen oder auszutauschen ist.

Diese Aufgabe wird erfindungsgemäß durch die im Patentanspruch 1 angegebenen Mittel gelöst. Vorteilhafte Ausgestaltungen sind den Unteransprüchen zu entnehmen.

Dadurch, daß beide Streben lösbar am festen Fahrzeugdach oder einem mit diesem verbundenen Teil befestigt sind und die flexible dünnwandige Schicht vorzugsweise zusätzlich an wenigstens einer von zwei an gegenüberliegenden Seiten angeordneten Streben lösbar befestigt ist, ist die Voraussetzung für ein leichtes Abnehmen oder vollständiges Austauschen des Schichtmaterials, vorzugsweise ohne gleichzeitiges Austauschen der Streben möglich.

Gemäß einer bevorzugten Ausführungsform bildet die Schicht an wenigstens einer Kante eine Schlaufe, durch die eine der Streben hindurchgeführt ist. Bei dieser Variante kann die gegenüberliegende Kante der Schicht fest mit einer zweiten Strebe verbunden sein, welche mit einem fest mit dem Fahrzeugdach verbundenen Teil lösbar verbunden ist.

Die Befestigung der Schicht kann auch zumindestens an einer der Streben mittels einer Klemmleiste gebildet werden, die einen Schlitz zur Aufnahme einer Kante der Schicht aufweist. Eine solche Klemmleiste kann durch Clipsverbindungen in einfacher Weise geöffnet werden, um die Schicht zum Reinigen zu entnehmen oder auszutauschen.

Vorzugsweise ist wenigstens eine der Streben seitlich mit einem an einem Dachrahmen des Fahrzeugs angeordneten Teil, wie beispielsweise einer Kabelkanalabdeckung oder einem schwenkbaren Ausstellarm verbunden.

Der Dachrahmen oder die Kabelkanalabdeckung oder ein anderes mit dem Dachrahmen verbundenes oder einstückig mit diesem ausgebildetes Teil weisen vorzugsweise eine fest damit verbundene Halterung für eine der Streben des Windabweisers auf.

Vorteilhaft ist die im ausgestellten Zustand des Windabweisers obenliegende Strebe an einem Teil befestigt, das an einem schwenkbar am Dachrahmen angelenkten Ausstellarm vorgesehen ist.

Es ist ferner vorteilhaft, wenn die lösbare Befestigung wenigstens ein zumindestens phasenweise in Axialrichtung einer der Streben bewegbares Halteteil aufweist. Dieses kann beispielsweise vorteilhaft von einer Rändelmutter oder einer Rändelschraube gebildet werden, die mit einem an der Strebe vorgesehenen Gewinde in Eingriff bringbar ist.

Alternativ dazu kann das Halteteil auch von einem sich koaxial zur Achse einer Strebe erstreckenden, federnd zur Mitte des Windabweisers vorgespannten Bügel, einem Stift oder einer Schraube bestehen.

Der Bügel, der Stift oder die Schraube sind dabei vorzugsweise an dem Ausstellarm angeordnet.

Schließlich ist es vorteilhaft, wenn - wie an sich aus dem eingangs gewürdigten Stand der Technik bekannt - die Schicht aus einem luftdurchlässigen, sieb- oder netzartigen Gewebe oder einer entsprechend perforierten Folie besteht. Hierdurch werden sehr gute Geräuschdämpfungseigenschaften erzielt. Der Windabweiser ist aufgrund der Flexibilität des Gewebes oder der Folie auch bei einer größeren Ausstellhöhe auf kleinem Raum unterzubringen und er ist ferner durch das leichte Austauschen oder die leichte Entnahme zu Reinigungszwecken kostengünstig zu warten.

Nachfolgend sind Ausführungsbeispiele der Erfindung anhand der Zeichnung beschrieben. Es zeigt:
- Fig. 1: eine schematische perspektivische Darstellung eines Fahrzeugdachs,
- Fig. 2: einen Querschnitt durch den vorderen Rand der Dachöffnung,
- Fig. 3: eine perspektivische Teildarstellung des Windabweisers mit einer Befestigung der oberen Strebe,
- Fig. 4: einer vergrößerte Detaildarstellung der Befestigung der oberen Strebe,
- Fig. 5: eine alternative Ausführungsform zu Fig. 4,
- Fig. 6: eine weitere alternative Ausführungsform zur Fig. 4 und
- Fig. 7: eine dritte alternative Ausführungsform mit seitlich schwenkbaren Ausstellarmen.

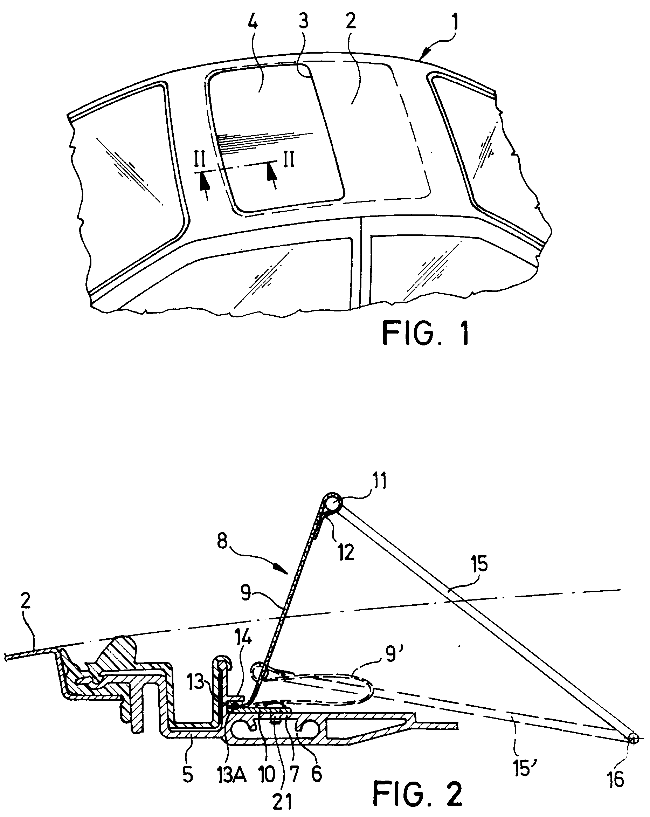

Das in Fig. 1 dargestellte Fahrzeug weist ein festes Fahrzeugdach 2 auf, in welchem eine Dachöffnung 3 ausgebildet ist, die mittels eines Deckels 4 wahlweise verschließbar oder wenigstens teilweise freilegbar ist.

Unterhalb der Dachöffnung ist ein Dachrahmen 5 angeordnet, an dem die nicht dargestellten, da bekannten Elemente für eine Bewegung des Deckels 4 - wie Führungsschienen und Gleitschuhe - angeordnet sind. Der Dachrahmen 5 weist im vorderen Bereich und in den seitlichen Bereichen eine Kabelführung 6 für darin verschiebbar gelagerte Antriebskabel auf die mittels einer Handkurbel oder eines Elektroantriebes antreibbar sind.

Die Kabelführung ist mittels einer Kabelkanalabdeckung 7 nach oben hin abgedeckt.

Am vorderen Rand der Dachöffnung 3 ist ein insgesamt mit 8 bezeichneter Windabweiser so angeordnet, daß er bei geschlossenem Deckel 4 unterhalb desselben liegt und bei nach hinten verschobenem Deckel 4 mittels seitlicher Ausstellarme 15 nach oben über das feste Fahrzeugdach 2 ausstellbar ist.

Der Windabweiser 8 besteht aus einer unteren Strebe 10 und einer oberen Strebe 11, welche mit einer flexiblen Schicht 9 aus einem Gewebe, einem Stoff oder einer Folie miteinander verbunden sind, sodaß der Windabweiser 8 insgesamt flexibel ist und dadurch im eingeklappten Zustand wenig Stauraum benötigt und dennoch auf eine relativ große Höhe über dem festen Fahrzeugdach 2 ausstellbar ist.

Die Schicht 9 weist vorzugsweise eine Perforation auf, sodaß die über die Windschutzscheibe des Fahrzeugs 1 nach oben geleitete Luftströmung in zahlreiche Teilströme zerlegt und verwirbelt wird, wodurch insgesamt eine sehr gute Geräuschdämpfung und eine Verhinderung des als Wummern bekannten Störgeräusches bei vollständig zurückgeschobenem Deckel 4 erreicht wird.

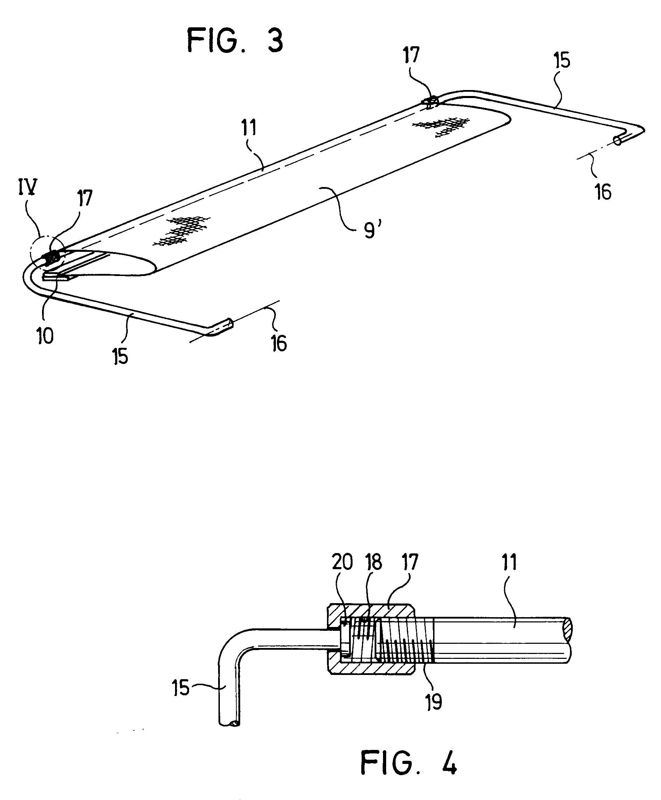

Da sich an einem solchen netzartige perforierten Windabweiser 8 auf der Schicht 9 im ausgestellten Zustand beim Fahrbetrieb Schmutzpartikel und Insekten ablagern, ist erfindungsgemäß vorgesehen, die Schicht 9 lösbar mit wenigstens einer der Streben 10 bzw. 11 zu verbinden, um dadurch eine leichte Austauschbarkeit der Schicht 9 zu erreichen. Hierzu ist im Ausführungsbeispiel gemäß Fign. 2 und 3 die untere Strebe 10 in Form einer Klemmleiste 13 ausgebildet, welche zwei zusammenclipsbare Schenkel aufweist, die einen Schlitz 13A einschließen, in welchen eine Kante der Schicht 9 einführbar und befestigbar ist. Die Klemmleiste 13 wird nach Festklemmen der Schicht 9 ihrerseits beispielsweise durch Einclipsen an einem mit dem Dachrahmen 5 verbundenen oder direkt an diesem ausgebildeten Teil fixiert. In Fig. 2 ist für diesen Zweck ein sich horizontal am Dachrahmen 5 erstreckender Vorsprung 14 vorgesehen, zwischen dessen Unterseite und der Oberseite der KabelkanalAbdeckung 7 die Klemmleiste 13 eingeklemmt wird. Optional kann eine zusätzliche Befestigung mittels einer oder mehrerer Schrauben 21 erfolgen.

Die obere Strebe 11 ist durch eine an der oberen Kante der Schicht 9 ausgebildete doppelwandige Schlaufe 12 hindurchgeschoben und seitlich mit einem in Achsrichtung der Strebe 11 bewegbaren Teil fixiert. Dieses Teil kann, wie in Fig. 4 dargestellt, als Rändelmutter 17 ausgebildet sein, welche auf einem nach innen umgebogenen Schenkel des Ausstellarmes 15 verschiebbar gelagert ist, wobei ein am Ende des abgebogenen Teils des Ausstellarms vorgesehener Bund 20 zur Innenseite hin einen Anschlag für die Rändelmutter 17 bildet, und wobei diese Rändelmutter über ein an ihr ausgebildetes Innengewinde 18 mit einem Außengewinde 19 an der oberen Strebe 11 in Eingriff bringbar ist. Zum Auswechseln der Schicht 9 bei deren Verschmutzung oder Verschleiß werden im Ausführungsbeispiel gemäß den Fign. 3 und 4 zu beiden Seiten die Rändelmuttern 17 nach außen geschraubt, wodurch die obere Strebe 11 frei bewegbar wird und aus der Schlaufe 12 der Schicht 9 entfernt werden kann. Anschließend wird die Klemmleiste 13 unter dem Vorsprung 14 herausgezogen (gegebenenfalls nach Lösen einer oder mehrerer zusätzlicher Fixierscbrauben 21) und anschließend zum Freilegen der unteren Kante der Schicht 9 aufgeklappt. Optional kann auch ein Austausch der Schicht 9 mitsamt einer am oberen Rand vorgesehenen Strebe 11 und einer am unteren Rand vorgesehenen unteren Strebe 10 vorgesehen sein. Vorteilhaft ist es jedoch, wenn zur Vermeidung von Abfall lediglich die Schicht 9 selbst einem Austausch unterzogen wird.

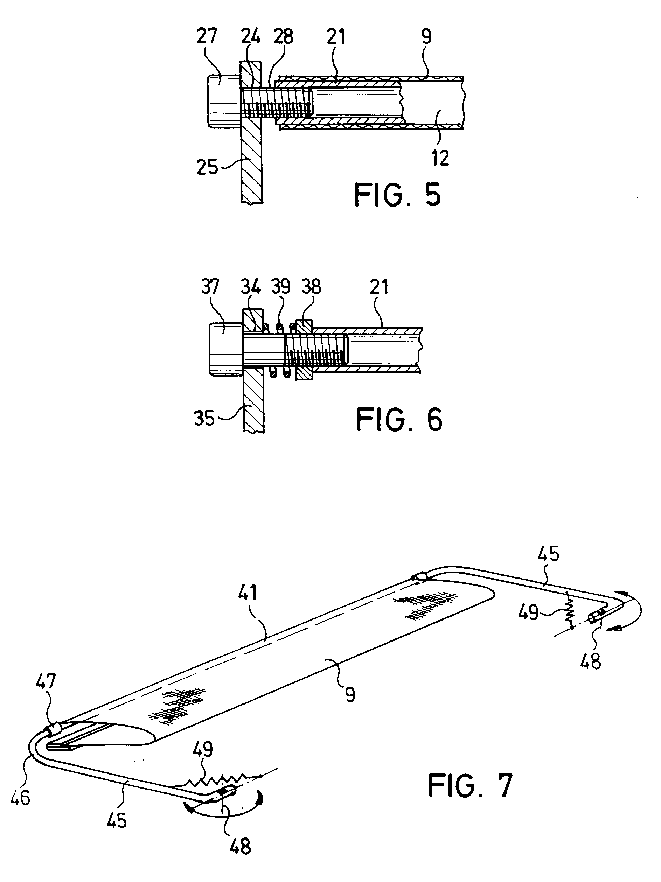

Bei der in Fig. 5 dargestellten Variante ist die obere Strebe mit 21 bezeichnet und zumindestens in ihren beiden äußeren Enden als hülsenförmiges Teil ausgebildet. In dieses hülsenförmige Teil greift eine Rändelschraube 27 ein, welche in eine Gewindebohrung 24 einschraubbar ist, die an den Ausstellarmen 25 vorgesehen ist. Das Freigeben der oberen Strebe 21 erfolgt in diesem Falle durch wenigstens teilweises Herausdrehen der Rändelschraube 27, sodaß die Enden der oberen Strebe 21 von den Rändelschrauben 27 freikommen und nach Wegschwenken aus der Schlaufe 12 entnommen werden können. Alternativ dazu kann die Gewindebohrung 24 im Ausstellarm 25 auch als Durchgangsbohrung ausgebildet sein, wobei dann das hülsenförmige Ende der oberen Strebe 21 ein Innengewinde aufweist, in das das Außengewinde der Rändelschraube 27 einschraubbar ist.

Wenn im Zusammenhang mit den vorstehend beschriebenen Ausführungsbeispielen von Rändelschrauben oder -muttern gesprochen wird, so versteht sich für den Fachmann, daß auch ebenso andere, mittels eines Werkzeugs betätigbare Schrauben- oder Mutternformen verwendbar sind.

Bei der in Fig. 6 gezeigten Ausführungsform sind wiederum die Enden der oberen Strebe 21 hülsenförmig ausgebildet. Die Ausstellarme 35 weisen hier jeweils koaxial zur Achse der oberen Strebe 21 Durchgangsbohrungen 34 auf, durch welche eine Schraube 37 mit ihrem Schaft hindurchgesteckt ist. Auf der Innenseite ist auf den Gewindeteil der Schraube 37 eine Mutter 38 aufgeschraubt. Zwischen dieser Mutter 38 und dem Ausstellarm 35 ist eine Druckfeder 39 angeordnet, die die Schraube 37 in Richtung auf die obere Strebe 21 hin federnd vorbelastet. Zum Austausch der Schicht 9 wird der Kopf der Schraube 37 gegen der Druck der Feder 39 nach außen gezogen, wodurch das Ende der Schraube 37 außer Eingriff mit dem hülsenförmigen Teil der oberen Strebe 21 kommt, sodaß diese anschließend wiederum aus der Schlaufe 12 herausgefädelt werden kann.

Als weitere Variante ist in Fig. 7 eine Ausführungsform gezeigt, bei der die seitlich des Windabweisers angeordneten Ausstellarme 45 nicht nur in Richtung der Höhe des Fahrzeuges um Schwenkachsen 16 schwenkbar gelagert sind sondern diese Schwenkachsen 16 zusätzlich um vertikale Achsen 48 drehbar gelagert sind. Dadurch können an den Enden der Ausstellarme 45 nach innen abgebogene bogenförmige Bügel 46 mit einer Hülse 47 in Eingriff gebracht werden, die außen an den Enden der oberen Strebe 41 vorgesehen ist. Alternativ dazu ist es selbstverständlich auch möglich, hülsenförmige Teile an den nach innen gerichteten Enden der Bügel 46 anzuordnen, welche dann über stangenförmige Endteile der oberen Strebe 41 greifen. Die Ausstellarme 45 sind durch Federn 49 vorgespannt, sodaß sie mit ihren bogenförmigen Bügeln 46 die obere Strebe 41 festhalten. Zum Austausch der Schicht 9 wird wenigstens einer der Bügel 46 gegen die Kraft der Feder 49 nach außen geschwenkt, wodurch die obere Strebe 41 freikommt und aus der Schlaufe 12 entfernt werden kann. Statt der in Fig. 7 dargestellten Zugfedern können für die Feder 49 selbstverständlich auch andere Federformen, wie beispielsweise Drehschenkelfedern, verwendet werden.

Es sei abschließend noch angemerkt, daß die vorstehend für die obere Strebe 11, 21, 41 beschriebenen Lösungen selbstverständlich auch zur lösbaren Befestigung einer unteren Strebe 10 geeignet sind. Umgekehrt ist auch ein einfaches Festklemmen oder Clipsen als alternative Befestigungsform für die obere Strebe 11, 21, 41 vorstellbar.

Der Kerngedanke der Erfindung, der allen Ausführungsbeispielen zugrunde liegt, liegt darin, den flexiblen, vorzugsweise perforierten Teil des Windabweisers (Schicht 9 als Gewebe, Folie oder Stoff) für sich gesehen oder mit einem oder zwei zur Versteifung an der Ober- bzw. Unterkante angeordneten Streben austauschen zu können.

### Bezugszeichenliste

- 1: Fahrzeug
- 2: Fahrzeugdach
- 3: Dachöffnung
- 4: Deckel
- 5: Dachrahmen
- 6: Kabelführung
- 7: Kabelkanal-Abdeckung
- 8: Windabweiser
- 9: Schicht (Gewebe; Folie)
- 10: (untere) Strebe
- 11,21,41: (obere)Strebe
- 12: Schlaufe
- 13: Klemmleiste
- 13A: Schlitz (an 13)
- 14: Vorsprung (an 5)
- 15,25,35: Ausstellarm
- 16: Schwerkachse
- 17: Rändelmutter
- 18: Innengewinde (an 17)
- 19: Außengewinde (an 11)
- 20: Bund (an 15)
- 21: Schraube
- 24: Gewindebohrung
- 27: Rändelschraube
- 28: Außengewinde (an 27)
- 34: Durchgangsloch
- 37: Schraube
- 38: Mutter
- 39: Feder
- 45: Ausstellarm
- 46: Bügel
- 47: Hülse
- 48: Drehachse
- 49: Feder

## Patentansprüche

1. Windabweiser für ein öffnungsfähiges Fahrzeugdach (2), bei dem der Körper des Windabweisers (8) von einer flexiblen dünnwändigen Schicht (9) gebildet wird, die an wenigstens zwei gegenüberliegenden Seiten an Streben (10;11,21,41) befestigt ist, **dadurch gekennzeichnet**, daß beide Streben (10,11,21,41) lösbar am Fahrzeugdach (2) oder an einem mit diesem verbundenen Teil befestigt sind.

2. Windabweiser nach Anspruch 1, **dadurch gekennzeichnet**, daß die Schicht (9) an wenigstens einer der Streben (10;11,21,41) lösbar befestigt ist.

3. Windabweiser nach Anspruch 2, **dadurch gekennzeichnet**, daß die Schicht (9) an wenigstens einer Kante eine Schlaufe (12) bildet, durch die eine der Streben (11,21,41) hindurchgeführt ist.

4. Windabweiser nach Anspruch 2, **dadurch gekennzeichnet**, daß wenigstens eine der Streben (10) von einer Klemmleiste (13) gebildet wird, die einen Schlitz (13A) zur Aufnahme einer Kante der Schicht (9) aufweist.

5. Windabweiser nach einem der vorhergehenden Ansprüche, **dadurch gekennzeichnet**, daß wenigstens eine der Streben (10;11,21,41) seitlich mit einem an einem Dachrahmen (5) des Fahrzeugdachs (2) angeordneten Teil (Kabelkanal-Abdeckung 7, Ausstellarm 15,25,35,45) lösbar verbunden ist.

6. Windabweiser nach Anspruch 5, **dadurch gekennzeichnet**, daß das am Dachrahmen (5) angeordnete Teil von einer fest mit diesem verbundenen Halterung (Kabelkanal-Abdeckung 7, Vorsprung 14) gebildet wird.

7. Windabweiser nach Anspruch 5, **dadurch gekennzeichnet**, daß das am Dachrahmen (5) angeordnete Teil von einem schwenkbar an diesem angelenkten Ausstellarm (15,25,35,45) gebildet wird.

8. Windabweiser nach Anspruch 5 bis 7, **dadurch gekennzeichnet**, daß die lösbare Befestigung wenigstens ein zumindestens phasenweise in Axialrichtung einer der Streben (10;11,21,41) bewegbares Halteteil (17;27;37;47) aufweist.

9. Windabweiser nach Anspruch 8, **dadurch gekennzeichnet**, daß das Halteteil von einer Rändelmutter (17) oder Rändelschraube (27) gebildet wird, die mit einem an der Strebe (11,21) vorgesehenen Gewinde in Eingriffbringbar ist.

10. Windabweiser nach Anspruch 8, **dadurch gekennzeichnet**, daß das Halteteil von einem sich koaxial zur Achse einer Strebe (21,41) erstreckenden, federnd zur Mitte des Windabweisers (8) vorgespannten Bügel (46), einer Schraube (27) oder einem Stift besteht.

11. Windabweiser nach Anspruch 7 und 10, **dadurch gekennzeichnet**, daß der Bügel (46), die Schraube (27) oder der Stift an dem Ausstellarm (15,25,35,45) angeordnet ist.

12. Windabweiser nach einem der vorhergehenden Ansprüche, **dadurch gekennzeichnet**, daß die Schicht (9) aus einem luftdurchlässigen Gewebe oder einer perforierten Folie besteht.
